# EUROPÄISCHE PATENTSCHRIFT

(11) **EP 1 772 313 B1**
(45) Veröffentlichungstag und Bekanntmachung des Hinweises auf die Patenterteilung: **10.07.2013**
(21) Anmeldenummer: 04022355.4
(22) Anmeldetag: 20.09.2004
(51) Int. Cl.: B60Q 3/02

(54) **Beleuchtungsvorrichtung**
Illumination device
Dispositif d'éclairage

(43) Veröffentlichungstag der Anmeldung: 11.04.2007
(73) Patentinhaber: MAN Nutzfahrzeuge AG, 80995 München (DE)
(72) Erfinder: Lipp, Andrea, 72119 Ammerbuch (DE)

(56) Entgegenhaltungen:
- EP-A- 0 378 359
- FR-A- 1 035 486
- US-A- 2 082 124
- US-A- 2 595 858
- US-A- 5 647 658
- PATENT ABSTRACTS OF JAPAN Bd. 2000, Nr. 10, 17. November 2000 (2000-11-17) -& JP 2000 185677 A (FUKUTANI MITSUO), 4. Juli 2000 (2000-07-04)
- PATENT ABSTRACTS OF JAPAN Bd. 2000, Nr. 09, 13. Oktober 2000 (2000-10-13) -& JP 2000 177482 A (TOYOTA AUTO BODY CO LTD), 27. Juni 2000 (2000-06-27)

## Beschreibung

Die Erfindung betrifft einen Omnibus mit einer Beleuchtungsvorrichtung gemäß Anspruch 1.

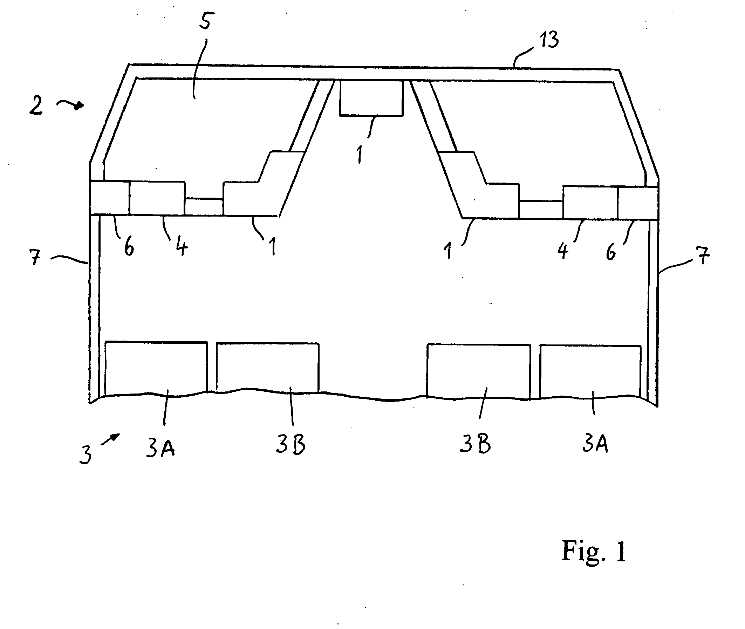

Gemäß dem Stand der Technik sind Beleuchtungsvorrichtungen bekannt, welche Bestandteil einer Innendeckenverkleidung eines Innenraumes eines Fahrzeuges sind. Die Beleuchtungsvorrichtung dient dazu, einen Fahrgastsitzbereich im Innenraum des Fahrzeuges zu beleuchten. Figur 1 zeigt eine schematische Querschnittsdarstellung einer Fahrgastzelle von einem Omnibus nach dem Stand der Technik. Die Innendeckenverkleidung 2 weist unter anderem mindestens eine Beleuchtungsvorrichtung 1 auf; mit welcher die Fahrgastzelle und der Fahrgastsitzbereich 3 beleuchtet werden können. Die Innendeckenverkleidung 2 weist ferner einen Luftkanal 4 auf, mit welchem Luft zu den einzelnen Sitzplätzen im Bereich 3 zuführbar ist. Der größte Teil der Innendeckenverkleidung 2 wird von einer Gepäckablage 5 in Anspruch genommen, welche sich oberhalb der Sitze befindet. Außerdem ist es üblich, dass eine Innendeckenverkleidung 2 eine Verdunklungseinrichtung 6, wie z.B. ein Rollo, aufnimmt, mit welcher sich der Innenraum des Fahrzeuges gegen von außen durch die Seitenscheibe 7 einfallendes Licht verdunkeln lässt. Gemäß dem Stand der Technik beansprucht die Beleuchtungsvorrichtung 1 damit einen Teil des Raumes der Innendeckenverkleidung 2. Dies ist nachteilig, weil dadurch der maximal verfügbare Raum für die Gepäckablage 5 und den Luftkanal . 4 begrenzt wird. Außerdem ist die Beleuchtungsvorrichtung 1 nach dem Stand der Technik im Mittenbereich der Innendeckenverkleidung 2 angeordnet. Dies führt dazu, dass bei Dunkelheit im Fahrgastsitzbereich am Fenster relativ ungünstige Lichtverhältnisse bestehen.

US 2595858 A offenbart einen Eisenbahnwaggon mit einer Beleuchtungsvorrichtung, welche getrennt von einer Innendeckenverkleidung eines Innenraumes des Eisenbahnwaggons ausgebildet ist und mit welcher ein Fahrgastsitzbereich im Innenraum des Eisenbahnwaggons beleuchtbar ist, wobei die Beleuchtungsvorrichtung auf der Seitenscheibe angeordnet ist, und wobei die Beleuchtungsvorrichtung mit einer Verdunklungseinrichtung versehen ist, mit welcher sich der Innenraum des Eisenbahnwaggons verdunkeln lässt, wobei die Verdunklungseinrichtung einen Gardine ist.

Es ist daher eine Aufgabe der Erfindung, die Lichtverteilung im Innenraum eines Fahrzeuges zu verbessern, wobei für die Beleuchtungsvorrichtung möglichst wenig Raum von der Innendeckenverkleidung benötigt wird.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Die erfindungsgemäße Beleuchtungsvorrichtung ist getrennt von einer Innendeckenverkleidung eines Innenraumes eines Fahrzeuges ausgebildet, wobei mit der Beleuchtungsvorrichtung ein Fahrgastsitzbereich im Innenraum des Fahrzeuges beleuchtbar ist. Dies ist vorteilhaft, da durch die Trennung der Beleuchtungsvorrichtung von der Innendeckenverkleidung überhaupt kein Raum von der Innendeckenverkleidung benötigt wird und somit für andere Komponenten wie Gepäckablage und Luftkanal der maximal mögliche Raum der Innendeckenverkleidung verfügbar ist.

Zudem kann bevorzugt vorgesehen sein, dass die Beleuchtungsvorrichtung am oberen Rand einer Seitenscheibe des Fahrzeuges angeordnet ist. Dies ist vorteilhaft, da sich die Beleuchtungsvorrichtung in dem Bereich befindet, aus welchem Tageslicht in das Fahrzeuginnere eintritt. Außerdem wird durch die Anordnung am oberen Rand einer Seitenscheibe erreicht, dass der äußere Fahrgastbereich gut ausgeleuchtet werden kann.

Zudem kann bevorzugt vorgesehen sein, dass die Beleuchtungsvorrichtung am unteren Rand einer oberen Seitenscheibe des Fahrzeuges angeordnet ist. Wird eine obere Seitenscheibe vorgesehen, ist ein für den Fahrgastsitzbereich sehr guter Lichteinfall erzielbar. Wird die Vorrichtung am unteren Rand einer solchen oberen Seitenscheibe angeordnet, wird der natürliche Lichteinfall kaum behindert, wobei weiterhin der maximal mögliche Raum für die Gepäckablage und den Luftkanal verfügbar sind.

Laut Erfindung ist die Beleuchtungsvorrichtung zwischen einer Seitenscheibe und der an diese Seitenscheibe angrenzenden oberen Seitenscheibe angeordnet . Dies ist vorteilhaft, da bei Tag durch die Seitenscheibe und die obere Seitenscheibe eine große Lichtmenge in den Fahrgastsitzbereich eintreten kann, und bei Nacht mittels der Beleuchtungsvorrichtung aus der gleichen Richtung Licht in den Innenraum einstrahlen kann. Durch die Anordnung der Vorrichtung zwischen der Seitenscheibe und der an diese angrenzende obere Seitenscheibe kann ein Verbindungselement zwischen den beiden Scheiben von der Beleuchtungsvorrichtung verdeckt werden, wodurch eine ansprechende Ästhetik entsteht.

Zudem kann bevorzugt vorgesehen sein, dass die Vorrichtung geeignet ist, eine Notbeleuchtung und/oder eine Vollbeleuchtung für den Innenraum des Fahrzeuges zu schaffen. Die Beleuchtungsvorrichtung lässt sich somit für unterschiedliche Einsatzfälle verwenden, so dass sie nicht nur zum Erfüllen einer Beleuchtungsfunktion, sondern auch zum Erzeugen von Beleuchtungseffekten verwendet werden kann.

Zudem kann bevorzugt vorgesehen sein, dass sich die Beleuchtungsvorrichtung entlang der gesamten Breite einer Seitenscheibe erstreckt. Dies ist vorteilhaft, da somit nicht nur eine punktuelle Lichterzeugung, sondern eher ein Lichtband erzielbar ist. Dies führt zu einer maximalen Ausleuchtung des Fahrzeuginnenraumes.

Zudem kann bevorzugt vorgesehen sein, dass die Vorrichtung im Kreuzungsbereich zwischen einem Vertikalholm, welcher an die Seitenscheibe und/oder obere Seitenscheibe angrenzt, und einem Horizontalholm, welcher an die Seitenscheibe und/oder obere Seitenscheibe angrenzt, angeordnet ist. Eine solche Position kann für eine Notbeleuchtung vollkommen ausreichen. Außerdem wird dadurch der Bereich markiert, in welchem sich benachbart dazu die Seitenscheiben befinden, wodurch im Notfall eine gute Orientierungshilfe geboten ist.

Zudem kann bevorzugt vorgesehen sein, dass die Vorrichtung in einem Bereich zwischen zwei Vertikalholmen angeordnet ist, welche an einander gegenüberliegenden Rändern an der Seitenscheibe und/oder oberen Seitenscheibe angrenzen. Damit lässt sich eine deutliche örtliche Trennung von der Position der Notbeleuchtung erreichen. In einem Bereich zwischen zwei Vertikalholmen können auch mehrere Beleuchtungsvorrichtungen vorgesehen sein, so dass z.B. jeder Sitzreihe eine Beleuchtungsvorrichtung zugeordnet werden kann.

Laut Erfindung ist die Vorrichtung mit einer Verdunklungseinrichtung versehen, mit welcher sich der Innenraum des Fahrzeuges verdunkeln lässt. Dies ist vorteilhaft, da somit eine weitere Komponente aus dem Bereich der Innendeckenverkleidung verlagert werden kann, so dass der maximal mögliche Raum für Gepäckablage und Luftkanal verfügbar sind. Ein Integrieren der Verdunklungseinrichtung mit der Beleuchtungsvorrichtung ist zudem vorteilhaft, da die Verdunklungseinrichtung an dieser Stelle vom Fahrgast gut erreichbar ist.

Im Folgenden wird die Erfindung anhand bevorzugter Ausfühnmgsformen mit Bezugnahme auf die Zeichnungen erläutert. In der Zeichnung zeigen:
Figur 1 eine Seitenquerschnittsansicht von einem Omnibus mit einer Innendeckenverkleidung nach dem Stand der Technik;
Figur 2 eine Seitenquerschnittsansicht von einem Omnibus mit einer Innendeckenverkleidung und Beleuchtungsvorrichtungen einer ersten Ausführungsform der Erfindung;
Figur 3 eine Draufsicht auf die erfindungsgemäße Beleuchtungsvorrichtung und zugehörige Seitenscheiben des Fahrzeuges;

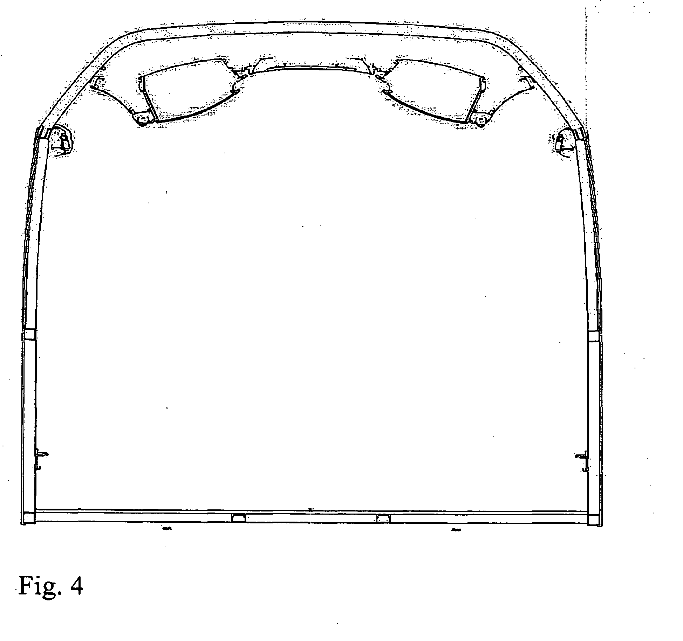

Figur 4 eine Seitenquerschnittsansicht von einem Omnibus mit einer Innendeckenverkleidung und Beleuchtungsvorrichtungen gemäß einer zweiten Ausführungsform der Erfindung.

In den Figuren sind für gleiche Teile gleiche Bezugszeichen verwendet.

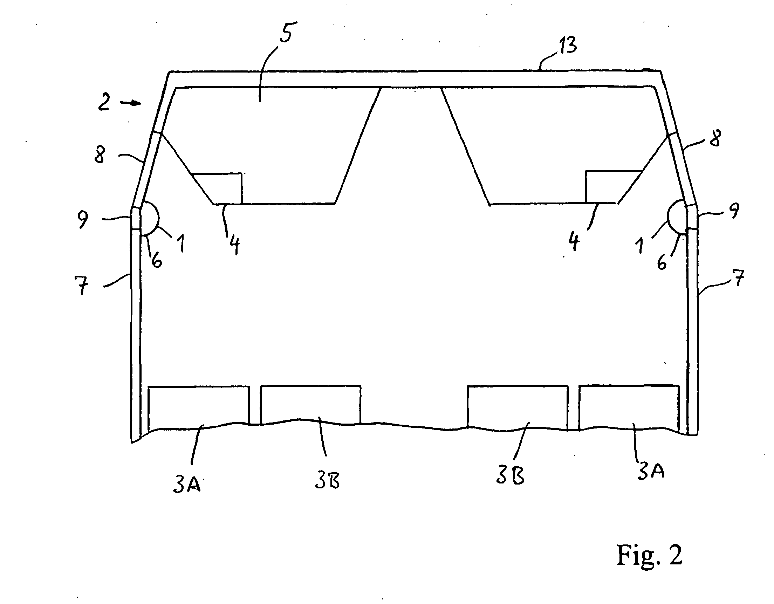

In Figur 2 ist ein Querschnitt der Innendeckenverkleidung eines Omnibusses, und die erfindungsgemäße Beleuchtungsvorrichtung dargestellt. Bei dieser Ausführungsform ist die Beleuchtungsvorrichtung zwischen der Seitenscheibe 7 und der an diese Seitenscheibe 7 angrenzenden oberen Seitenscheibe 8 angeordnet. Beide Seitenscheiben sind mit einem Horizontalholm 9 verbunden. Die Beleuchtungsvorrichtung 1 ist ferner mit einer Verdunklungseinrichtung einem Rollo 6, versehen, mit welchem sich der Innenraum des Fahrzeuges verdunkeln lässt. Die Beleuchtungsvorrichtung wie auch die Verdunklungseinrichtung sind somit von der Innendeckenverkleidung 2, welche sich unterhalb des Fahrzeugdaches 13 befindet, getrennt. Damit wird der für den Luftkanal 4 und die Gepäckablage 5 verfügbare Raum weder durch die Beleuchtungsvorrichtung noch durch die Verdunklungseinrichtung begrenzt. Natürliches Licht kann von außerhalb des Fahrzeuges durch die Seitenscheibe 7 und die obere Seitenscheibe 8 in den Fahrzeuginnenraum eintreten. Bei Dunkelheit wird dieser Lichteinfall durch die künstliche Beleuchtung mittels der Beleuchtungsvorrichtung 1 ersetzt. Durch eine solche Positionierung der Beleuchtungsvorrichtung wird auch bei Dunkelheit eine angenehme Lichtatmosphäre geschaffen.

Die Beleuchtungsvorrichtung 1 sollte derart ausgebildet sein, dass sie nur eine minimale Tiefe aufweist und nur möglichst wenig in den Fahrgastinnenraum hineinreicht. Damit ist es möglich, dass zwischen oberer Seitenscheibe 8 und der Innendeckenverkleidung 2 ein Freiraum 14 entsteht. Bei entsprechender Dimensionierung ist es damit möglich, dass ein Fahrgast im Bereich 3A aufrecht stehen kann, ohne an die Beleuchtungsvorrichtung oder an die Innendeckenverkleidung anzustoßen.

Die Verdunklungseinrichtung 6 verdeckt vorzugsweise den Lichteinfall durch die Seitenscheibe 7. Gleichwohl kann auch ein Lichteinfall durch die Seitenscheibe 8 mit einer Verdunklungseinrichtung vermieden werden.

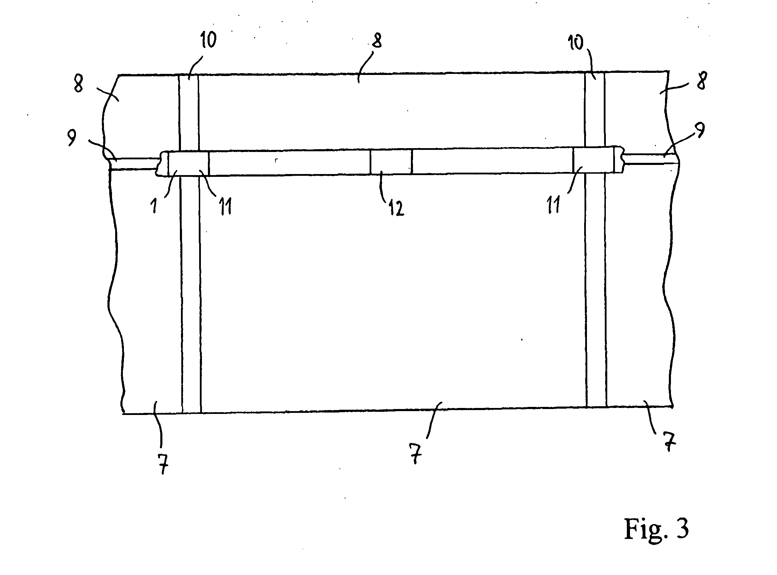

Figur 3 zeigt eine Draufsicht auf die Beleuchtungsvorrichtung 1, die Seitenscheibe 7 und die obere Seitenscheibe 8. Die Beleuchtungsvorrichtung 1 verdeckt den Horizontalholm 9, welcher beide Seitenscheiben 7, 8 miteinander verbindet. Ein Vertikalholm 10 ist vorgesehen, um zwei benachbarte Seitenscheiben 7 voneinander zu trennen. Bei der in Figur 3 dargestellten Ausführungsform weist die Beleuchtungsvorrichtung 1 im Kreuzungsbereich zwischen dem Vertikalholm 10 und dem Horizontalholm 9 eine Notbeleuchtung 11 auf. Im Bereich zwischen zwei Vertikalholmen 10, welche an einander gegenüberliegenden Rändern der Seitenscheibe 7 angrenzen, weist die Beleuchtungsvorrichtung ein Leuchtelement 12 auf. Dieses Leuchtelement 12 kann dazu vorgesehen sein, eine Vollbeleuchtung für den Innenraum des Fahrzeuges zu schaffen. Selbstverständlich ist es möglich, dass mehrere Leuchtelemente 12 benachbart zueinander angeordnet sind, so dass eine Beleuchtung entlang der gesamten Breite einer Seitenscheibe 7 erzielt wird. Damit kann der Innenraum gleichmäßig und mit maximaler Lichtstärke beleuchtet werden.

Die Beleuchtungsvorrichtung ist vorzugsweise für eine konstante Lichtleistung vorgesehen. Es ist jedoch ebenfalls möglich, mit der Beleuchtungsvorrichtung eine zeitlich variable Lichtsteuerung vorzusehen, so dass Lichteffekte im Innenraum erzeugt werden können. Ferner können das Lichtelement 12 und die Notbeleuchtung 11 einstückig ausgebildet sein.

### Bezugszeichen

- 1: Beleuchtungsvorrichtung
- 2: Innendeckenverkleidung
- 3: Fahrgastsitzbereich
- 3A: Fahrgastsitzbereich am Fenster
- 3B: Fahrgastsitzbereich am Gang
- 4: Luftkanal
- 5: Gepäckablage
- 6: Verdunklungseinrichtung
- 7: Seitenscheibe
- 8: obere Seitenscheibe
- 9: Horizontalholm
- 10: Vertikalholm
- 11 1: Notbeleuchtung
- 12: Leuchtelement
- 13: Fahrzeugdach

## Patentansprüche

1. Omnibus mit einer Beleuchtungsvorrichtung (1), welche getrennt von einer Innendeckenverkleidung (2) eines Innenraumes des Omnibusses ausgebildet ist und mit welcher ein Fahrgastsitzbereich (3) im Innenraum des Omnibusses beleuchtbar ist, wobei die Beleuchtungsvorrichtung (1) zwischen einer Seitenscheibe (7) und der an diese Seitenscheibe (7) angrenzenden oberen Seitenscheibe (8) angeordnet ist, wobei die Beleuchtungsvorrichtung (1) mit einer Verdunklungseinrichtung (6) versehen ist, mit welcher sich der Innenraum des Omnibusses verdunkeln lässt, wobei die Verdunklungseinrichtung (6) ein Rollo ist.

2. Omnibus nach Anspruch 1, wobei die Beleuchtungsvorrichtung (1) am oberen Rand einer Seitenscheibe (7) des Omnibusses angeordnet ist.

3. Omnibus nach einem der Ansprüche 1 oder 2, wobei die Beleuchtungsvorrichtung (1) am unteren Rand einer oberen Seitenscheibe (8) des Omnibusses angeordnet ist.

4. Omnibus nach einem der Ansprüche 1 bis 3, wobei die Beleuchtungsvorrichtung (1) geeignet ist, eine Notbeleuchtung für den Innenraum des Omnibusses zu schaffen.

5. Omnibus nach einem der Ansprüche 1 bis 4, wobei die Beleuchtungsvorrichtung (1) geeignet ist, eine Vollbeleuchtung für den Innenraum des Omnibusses zu schaffen.

6. Omnibus nach einem der Ansprüche 1 bis 5, wobei sich die Beleuchtungsvorrichtung (1) entlang der gesamten Breite einer Seitenscheibe (7) erstreckt.

7. Omnibus nach einem der Ansprüche 1 bis 5, wobei die Beleuchtungsvorrichtung (1) im Kreuzungsbereich zwischen einem Vertikalholm (10), welcher an die Seitenscheibe (7) und/oder obere Seitenscheibe (8) angrenzt, und einem Horizontalholm (9), welcher an die Seitenscheibe (7) und/oder obere Seitenscheibe (8) angrenzt, angeordnet ist.

8. Omnibus nach einem der Ansprüche 1 bis 5, wobei die Beleuchtungsvorrichtung (1) in einem Bereich zwischen zwei Vertikalholmen (10) angeordnet ist, welche an einander gegenüberliegenden Rändern der Seitenscheibe (7) und/oder oberen Seitenscheibe (8) angrenzen.

## Claims

1. Omnibus with an illumination device (1), which is formed separately from an interior ceiling liner (2) of an interior of the omnibus and with which a passenger seat area (3) in the interior of the omnibus can be illuminated, the illumination device (1) being arranged between a side window (7) and the upper side window (8) adjacent to this side window (7), the illumination device (1) being provided with a darkening means (6), with which the interior of the omnibus can be darkened, the darkening means (6) being a roller blind.

2. Omnibus according to Claim 1, the illumination device (1) being arranged at the upper edge of a side window (7) of the omnibus.

3. Omnibus according to either of Claims 1 and 2, the illumination device (1) being arranged at the lower edge of an upper side window (8) of the omnibus.

4. Omnibus according to one of Claims 1 to 3, the illumination device (1) being suitable for creating emergency illumination for the interior of the omnibus.

5. Omnibus according to one of Claims 1 to 4, the illumination device (1) being suitable for creating full illumination for the interior of the omnibus.

6. Omnibus according to one of Claims 1 to 5, the illumination device (1) extending along the entire width of a side window (7).

7. Omnibus according to one of Claims 1 to 5, the illumination device (1) being arranged in the cross-over area between a vertical bar (10), which is adjacent to the side window (7) and/or the upper side window (8), and a horizontal bar (9), which is adjacent to the side window (7) and/or upper side window (8).

8. Omnibus according to one of Claims 1 to 5, the illumination device (1) being arranged in a region between two vertical bars (10), which are adjacent to mutually opposing edges of the side window (7) and/or upper side window (8).

## Revendications

1. Omnibus comprenant un dispositif d'éclairage (1), qui est réalisé de manière séparée d'un habillage de plafond intérieur (2) d'un habitacle de l'omnibus, et qui permet d'éclairer une région de sièges pour les passagers (3) dans l'habitacle de l'omnibus, le dispositif d'éclairage (1) étant disposé entre une vitre latérale (7) et la vitre latérale supérieure (8) adjacente à cette vitre latérale (7), le dispositif d'éclairage (1) étant pourvu d'un dispositif d'obscurcissement (6), avec lequel l'habitacle de l'omnibus peut être obscurci, le dispositif d'obscurcissement (6) étant un store déroulant.

2. Omnibus selon la revendication 1, dans lequel le dispositif d'éclairage (1) est disposé au bord supérieur d'une vitre latérale (7) de l'omnibus.

3. Omnibus selon l'une quelconque des revendications 1 ou 2, dans lequel le dispositif d'éclairage (1) est disposé au bord inférieur d'une vitre latérale supérieure (8) de l'omnibus.

4. Omnibus selon l'une quelconque des revendications 1 à 3, dans lequel le dispositif d'éclairage (1) est approprié pour fournir un éclairage de secours pour l'habitacle de l'omnibus.

5. Omnibus selon l'une quelconque des revendications 1 à 4, dans lequel le dispositif d'éclairage (1) est approprié pour fournir un éclairage total de l'habitacle de l'omnibus.

6. Omnibus selon l'une quelconque des revendications 1 à 5, dans lequel le dispositif d'éclairage (1) s'étend le long de toute la largeur d'une vitre latérale (7).

7. Omnibus selon l'une quelconque des revendications 1 à 5, dans lequel le dispositif d'éclairage (1) est disposé dans la région de l'intersection entre un montant vertical (10) qui est adjacent à la vitre latérale (7) et/ou à la vitre latérale supérieure (8), et un longeron horizontal (9) qui est adjacent à la vitre latérale (7) et/ou à la vitre latérale supérieure (8).

8. Omnibus selon l'une quelconque des revendications 1 à 5, dans lequel le dispositif d'éclairage (1) est disposé dans une région entre deux montants verticaux (10) qui sont adjacents à des bords mutuellement opposés de la vitre latérale (7) et/ou de la vitre latérale supérieure (8).
